# FASCICULE DE BREVET EUROPEEN

(11) **EP 3 621 853 B1**
(45) Date de publication et mention de la délivrance du brevet: **24.02.2021**
(21) Numéro de dépôt: 18728929.3
(22) Date de dépôt: 04.05.2018
(51) Int. Cl.: B60R 11/04, B60S 1/08

(54) **VITRAGE DE VEHICULE COMPORTANT UNE EMBASE DE FIXATION D'ACCESSOIRES A PIECE METALLIQUE ET EMBASE DE FIXATION D'ACCESSOIRES.**
FAHRZEUGGLASSCHEIBE MIT EINEM ZUBEHÖRBEFESTIGUNGSSOCKEL MIT METALLTEIL UND ZUBEHÖRBEFESTIGUNGSSOCKEL
VEHICLE GLASS PANEL COMPRISING AN ACCESSORY-ATTACHMENT BASE WITH METAL PART AND ACCESSORY-ATTACHMENT BASE.

(30) Priorité: 11.05.2017 FR 1754120
(43) Date de publication de la demande: 18.03.2020
(73) Titulaire: SAINT-GOBAIN GLASS FRANCE, 92400 Courbevoie (FR)
(72) Inventeur: SILVESTRINI, Laurent, 60400 Bussy (FR)
(74) Mandataire: Saint-Gobain Recherche
(86) Numéro de dépôt international: PCT/FR2018/051118
(87) Numéro de publication internationale: WO 2018/206884

(56) Documents cités:
- WO-A1-2011/103901
- US-A1- 2015 327 398

## Description

La présente invention concerne la fixation d'accessoires à des vitrages de véhicule et plus particulièrement des vitrages de véhicules automobiles.

Un ou plusieurs accessoires sont usuellement fixés à la face intérieure d'un vitrage, tel qu'un pare-brise, au sein de l'habitacle d'un véhicule.

Les accessoires sont par exemple un rétroviseur, un capteur de pluie et/ou de luminosité, ou encore un détecteur ou une caméra ou un écran de visualisation.

Les accessoires sont montés contre le vitrage grâce à un support tel qu'une platine et/ou une embase et/ou une semelle, qui est (ou sont) fixée(s) habituellement chacune contre la face intérieure d'un élément vitré du vitrage de véhicule, et sur laquelle (lesquelles) sont attachés mécaniquement un (ou plusieurs) des accessoire(s).

Le positionnement précis et la fixation précise de la platine, de l'embase et de la semelle contre la face intérieure de l'élément vitré permet alors un positionnement et une attache précise de l'accessoire contre, ou quasiment contre, cette face intérieure de l'élément vitré.

Le support est le plus souvent en matière plastique, sa face intérieure étant doté de formes pour coopérer avec les accessoires à monter qui peuvent être fixés par clipsage par exemple. Le support est rendue solidaire de la face intérieure du vitrage par une opération de collage, telle que par une colle polymérisable ou des moyens adhésifs double-face.

Certains accessoires ne sont pas accessibles manuellement aux usagers du véhicule, comme par exemple les capteurs.

Toutefois, certains accessoires nécessitent des interfaces de fixation particulièrement robustes car ces accessoires sont destinés à être manipulés de l'intérieur du véhicule, par les usagers du véhicule. Ce sont les accessoires qu'il est convenu d'appeler des « accessoires intérieures », comme par exemple les rétroviseurs intérieurs ou les écrans de visualisation intérieurs.

Actuellement, les supports qui servent à fixer de tels accessoires intérieurs sont des supports entièrement métalliques ; ce sont des embases ou des platines métalliques, en métal ou en alliage métallique. La face extérieure de la platine métallique est recouverte sur la totalité de sa surface, de moyens adhésifs pour le collage de la platine contre la face intérieure de l'élément vitré. La face intérieure de la platine est conçue en comprenant des éléments métalliques de fixation.

L'art antérieur connaît en particulier de la demande internationale de brevet WO 2011/103901 une telle embase, ou platine, métallique, référencée 16 dans ce document, qui révèle un vitrage selon le préambule de la revendication 1.

Or, il n'est pas envisageable pour de tels accessoires intérieurs de prévoir un support en matière plastique (même en matière plastique renforcée de fibres) car la matière plastique ne résisterait pas dans le temps aux contraintes subies par l'accessoire intérieur lors de son usage.

Par ailleurs, il est connu de réaliser un support à base de matière plastique pour un ou plusieurs accessoires dont aucun n'est un « accessoire intérieure » au sens exposé ci-dessus.

La demande internationale de brevet WO 2016/177955 propose ainsi un vitrage à embase et platine en une seule pièce qui est à base de matière plastique, pour la fixation de plusieurs accessoires, non-intérieurs.

A ce jour, lorsqu'il est prévu de fixer à la fois un support métallique (pour un accessoire intérieur) et un support à base de matière plastique contre la face intérieure d'un élément vitré, il faut prévoir et gérer l'utilisation de deux matières adhésives distinctes car la matière adhésive homologuée pour un support métallique ne l'est pas pour les supports à base de matière plastique et inversement, la matière adhésive homologuée pour un support à base de matière plastique ne l'est pas pour les supports métalliques.

Aussi, le procédé de fabrication d'un vitrage sur lequel doivent être fixés des supports permettant de fixer différents accessoires est fastidieux et long, imposant différents types de supports, en matière plastique et en métal, impliquant des étapes de collage distinctes liées à différents types de colle et de temps de polymérisation, et nécessitant des étapes de solidarisation qui sont séparées dans une chaîne de fabrication.

La présente invention a pour but de proposer un support à base de matière plastique pour la fixation d'au moins un accessoire intérieur, en particulier pour la fixation d'un accessoire intérieur à interface métallique, qui ne présente pas les inconvénients précités et permette notamment de simplifier le procédé de fabrication d'un vitrage à doter de supports pour la fixation de plusieurs accessoires dont au moins un accessoire intérieur.

La présente invention se rapporte à un vitrage de véhicule selon la revendication 1. Les revendications dépendantes présentent des caractéristiques avantageuses.

Ce vitrage de véhicule comporte au moins un élément vitré et au moins une embase pour l'attachement réversible d'au moins un accessoire intérieur, tel qu'un rétroviseur intérieur ou un écran de visualisation intérieur, audit élément vitré, ladite embase étant à base de matière plastique et présentant un corps, une face extérieure située en vis-à-vis de la face intérieure dudit élément vitré, une face intérieure et un logement pour la fixation d'un autre accessoire en vis-à-vis de la face intérieure dudit élément vitré, tel qu'un capteur.

Le vitrage selon l'invention est remarquable en ce que ladite embase comporte en outre une pièce métallique qui présente :
- au moins une partie noyée située à l'intérieur du corps de ladite embase, et de préférence deux parties noyées situées toutes les deux à l'intérieur du corps de ladite embase,
- au moins une partie saillante extérieure faisant saillie plus à l'extérieur que ladite face extérieure de ladite embase et en direction de la face intérieure dudit élément vitré, et de préférence deux parties saillantes extérieures, faisant saillie toutes les deux plus à l'extérieur que ladite face extérieure de ladite embase et en direction de la face intérieure dudit élément vitré, et
- au moins une partie saillante intérieure qui fait saillie plus à l'intérieur que ladite face intérieure de ladite embase.

Dans la suite de la description, les termes « intérieur », « extérieur», s'entendent en qualifiant des parties du support considérées dans la position d'installation du support dans sa destination finale, c'est-à-dire fixé contre une face intérieure d'un élément vitré d'un vitrage de véhicule lui-même installé dans une baie de carrosserie du véhicule, le terme « intérieur » qualifiant une partie faisant face vers l'intérieur du véhicule tandis que « extérieur » qualifie une partie en vis-à-vis de l'extérieur du véhicule.

La notion de « à base de matière plastique » signifie que le constituant essentiel du matériau constituant l'élément (l'embase) est de la matière plastique ; elle vise à couvrir que cette matière plastique peut être renforcée, par exemple en y mélangeant des fibres de renforts et notamment des fibres de verre ; mais exclut que le matériau constituant l'élément (l'embase) soit en lui-même métallique, c'est-à-dire en métal ou en alliage métallique.

Ainsi, la (ou les) partie(s) saillante(s) intérieure(s) participe(nt) à une interface de fixation pour la fixation mécanique de l'accessoire intérieur (ou de chaque accessoire intérieur s'il y en a plusieurs) et il est en outre prévu, grâce aux autres parties de la pièce métallique (partie(s) noyée(s) et partie(s) saillante(s) extérieure(s)) une coopération mécanique très élevée avec l'embase, permettant d'offrir une interface de fixation très forte.

C'est donc la (ou les) partie(s) saillante(s) intérieure(s) de la pièce métallique qui permette(nt) de fixer un accessoire intérieur, en un accessoire intérieur dont la terminaison de fixation est, de préférence, elle-même métallique : en métal ou alliage métallique.

Dans une variante particulièrement résistante tout en étant compact, ladite pièce métallique présente :
- uniquement deux parties noyées situées à l'intérieur du corps de ladite embase,
- uniquement deux parties saillantes extérieures, faisant saillie toutes les deux plus à l'extérieur que ladite face extérieure de ladite embase et en direction de la face intérieure dudit élément vitré, et
- une seule partie saillante intérieure qui fait saillie plus à l'intérieur que ladite face intérieure de ladite embase.

La pièce métallique est constituée d'un métal ou d'un alliage métallique ; elle ne comporte pas de matière plastique. La pièce métallique est, de préférence, en aluminium, zamak, acier, ou acier inoxydable ; elle peut toutefois être revêtue, partiellement ou totalement, d'une couche de peinture ou une couche de vernis ou une couche d'accrochage augmentant la cohésion avec la matière plastique de l'embase.

De préférence, la pièce métallique est solidaire de manière inamovible de l'embase à base de matière plastique. De préférence, la pièce métallique est un insert surmoulé avec la partie en matière plastique de l'élément pour fixation, c'est-à-dire est un insert surmoulé avec l'embase.

Dans une variante qui n'est pas préférée, la pièce métallique est rapportée sur l'embase ultérieurement à la fabrication de l'embase. Dans une telle variante, l'embase présente de préférence une forme adaptée pour une coopération mécanique mutuelle avec la pièce métallique, de préférence sans nécessiter d'outil.

Avantageusement, le corps de l'embase présente une face extérieure qui suit la forme plane ou courbe de la surface de l'élément vitré contre laquelle est destinée à être fixée l'embase.

Dans une variante particulièrement résistante tout en étant particulièrement compact, deux parties noyées sont situées de part et d'autre dudit logement pour la fixation d'un autre accessoire et/ou deux parties saillantes extérieures sont situées de part et d'autre dudit logement pour la fixation d'un autre accessoire.

De préférence, ladite partie saillante extérieure est au contact de la face intérieure dudit élément vitré, et de préférence les deux parties saillantes extérieures, ou toutes les parties saillantes extérieures, sont au contact de la face intérieure dudit élément vitré ; il s'agit d'un contact direct, en particulier sans interposition de matière adhésive.

Bien que le contact d'une partie métallique avec une surface d'un élément vitré, en particulier lorsqu'il est en verre, ne soit pas recommandé, cette configuration d'embase à base de matière plastique combinée avec une pièce métallique d'interface de fixation pour accessoire intérieur qui est mise en contact avec la face intérieure de l'élément vitré, engendre de manière surprenante une amélioration du maintien de l'accessoire intérieur et diminue très fortement, voire supprime les vibrations présentes habituellement au niveau de l'accessoire intérieur lors du fonctionnement du véhicule.

Ladite embase est, de préférence, attachée audit élément vitré, grâce à une matière adhésive, notamment grâce à couche de colle ou au moins une plaque adhésive double-face, avec de préférence au moins une et de préférence encore deux, partie(s) saillante(s) extérieure(s) qui présente(nt), chacune, une épaisseur identique à l'épaisseur de ladite matière adhésive.

Ladite partie saillante intérieure est une interface de fixation par clipsage, ou par agrafage, ou par chaussage, ou par quart-de-tour et constitue de préférence une interface de fixation d'un pied de rétroviseur intérieur ou d'un écran de visualisation intérieur. De préférence il ne s'agit pas d'une interface de fixation par vissage : la pièce métallique ne comporte alors ni filetage, ni taraudage pour sa fixation à l'embase.

Ladite pièce métallique est, de préférence, une pièce d'un seul tenant, afin de présenter une résistance mécanique élevée, et présente, de préférence encore, une forme d'arche pour faciliter l'accrochage dudit accessoire avec deux pieds latéraux qui sont reliés par un dôme, ledit dôme appartenant au moins en partie à ladite partie saillante intérieure et de préférence, chacun des pieds fait saillie plus l'extérieur que ladite face extérieure de ladite embase et en direction de la face intérieure dudit élément vitré.

Dans une variante spécifique, ladite embase est liée mécaniquement par au moins un bras de liaison en matière plastique liant ladite embase à une platine, et de préférence ladite embase est liée mécaniquement par plusieurs bras de liaison.

Lorsque ladite embase est liée mécaniquement par au moins un bras de liaison en matière plastique à une platine, le (ou les) bras de liaison est (ou sont), de préférence, relativement souple(s) pour permettre de modifier l'orientation/l'agencement de l'embase dans les trois directions de l'espace par rapport à la platine.

Le (ou les) bras de liaison entre l'embase et la platine permette(nt) avantageusement, lors de l'installation de la platine et de l'embase sur un élément vitré, de réaliser une liaison ajustée avec précision entre l'élément vitré et les au moins deux accessoires qui sont attachés à cet élément vitré par l'intermédiaire de l'embase et de la platine.

Pour plus de détails sur ces bras de liaison et leurs avantages, on peut se référer à la demande internationale de brevet WO 2016/177955, au nom du Demandeur.

De préférence, ledit autre accessoire qui est destiné à être fixé à l'embase par ledit logement en vis-à-vis de la face intérieure dudit élément vitré est un « accessoire à visée extérieure » dans le sens où il doit être positionné avec une partie orientée vers l'extérieur du véhicule ; ce peut être par exemple un capteur destiné à capter des informations provenant de l'extérieur.

L'invention est également relative à une embase de fixation d'accessoires, pour la fixation de plusieurs accessoires au vitrage selon l'invention, ladite embase comportant une pièce métallique qui présente :
- au moins une partie noyée, et de préférence deux parties noyées située(s) à l'intérieur du corps de ladite embase,
- au moins une partie saillante extérieure, et de préférence deux parties saillantes extérieures, faisant saillie plus à l'extérieur que ladite face extérieure de ladite embase et en direction de la face intérieure dudit élément vitré, et
- au moins une partie saillante intérieure qui fait saillie plus à l'intérieur que ladite face intérieure de ladite embase et participe à une interface de fixation pour la fixation mécanique de l'accessoire intérieur.

La présente invention est décrite ci-après à l'aide d'exemples illustratifs de réalisation de l'invention, et à partir des illustrations ci-jointes, dans lesquelles :
- La figure 1 est une vue en perspective plongeante d'un support selon l'invention de fixation d'accessoires à monter sur un élément vitré, le support étant illustré selon sa face intérieure ;
- La figure 2 est une vue en perspective du support de la figure 1 montrant la face intérieure ;
- La figure 3 est une vue de face de la face intérieure du support de la figure 1 ;
- La figure 4 est une vue en coupe selon AA' de la figure 1, illustrant en outre l'adhésion du support contre une face intérieure d'un élément vitré d'un vitrage.
- La figure 5 est une vue d'une embase de fixation d'accessoires ; et
- La figure 6 est une vue en perspective montrant la pièce métallique seule, qui est utilisée pour le support des figures 1 à 4 ou pour l'embase de la figure 5 ;

Dans ces figures, les proportions entre les différents éléments sont respectées sur chaque figure mais les éléments en arrière-plan ne sont en général pas représentés, afin de faciliter leur lecture.

La présente invention est relative à un support pour la fixation de plusieurs accessoires à un élément vitré tel qu'un substrat verrier d'un vitrage de véhicule, en particulier d'un vitrage automobile ; ce vitrage de véhicule peut être en particulier un pare-brise.

Ce support est destiné à permettre d'attacher mécaniquement et de manière réversible, plusieurs accessoires.

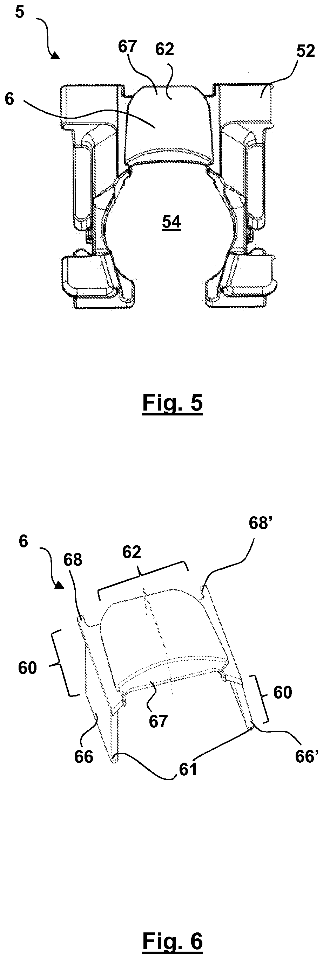

Ce support peut permettre d'attacher seulement deux accessoires : il s'agit alors d'une embase 5 simple, comme celle illustrée par exemple en figure 5.

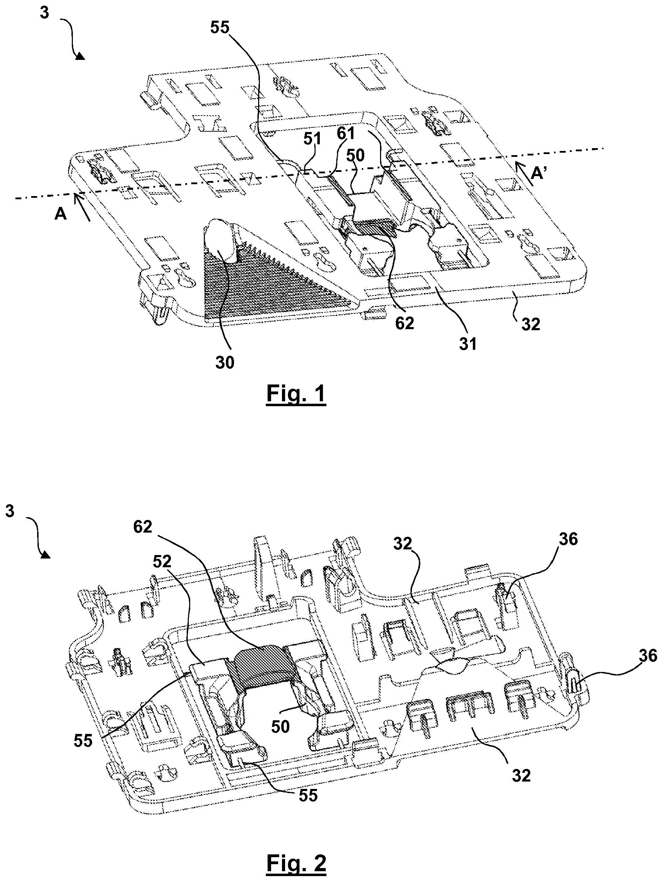

Ce support peut permettre d'attacher au moins trois accessoires : il s'agit alors d'une embase 5 à platine 3, comme celle illustrée par exemple aux figures 1 à 4.

Ce support, sous forme d'embase 5 simple ou d'embase 5 à platine 3 doit permettre d'attacher réversiblement à un élément vitré au moins un accessoire particulier, appelé « accessoire intérieur » car accessible à un usager du véhicule (usager situé à l'intérieur du véhicule) ; il s'agit d'un accessoire utile et utilisé directement par un usager du véhicule et en particulier un miroir intérieur destiné à la vision du conducteur vers l'arrière du véhicule, appelé « rétroviseur », ou encore un écran de visualisation intérieur, par exemple destiné au même but.

Cet accessoire intérieur présente une forme adaptée et comporte des moyens de fixation pour sa fixation de manière amovible au support, et en particulier des moyens de fixation métalliques.

Ce support doit permettre d'attacher réversiblement à l'élément vitré au moins un autre accessoire et comporte ainsi pour cela un logement ; cet autre accessoire n'est pas un accessoire intérieur au sens ci-dessus ; cet autre accessoire pourrait être qualifié « d'accessoire à visée extérieure » dans le sens où il doit être positionné avec une partie orientée vers l'extérieur du véhicule ; ce peut être par exemple un capteur destiné à capter des informations provenant de l'extérieur.

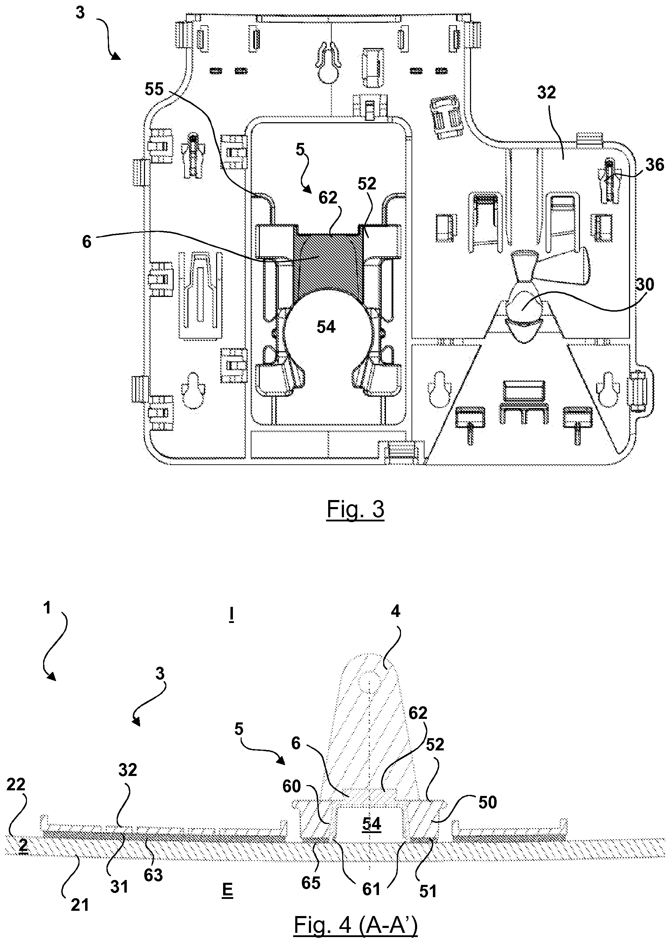

La figure 3 permet de bien comprendre en quoi consiste les interactions qui permettent de mettre en œuvre l'invention car elle présente un vitrage 1 de véhicule, illustré partiellement et en coupe transversale, ce vitrage comportant au moins un élément vitré 2 et au moins une embase 5 pour l'attachement réversible d'un accessoire intérieur, tel qu'un rétroviseur intérieur, audit élément vitré 2.

Le vitrage 1 est destiné à fermer une baie réalisant une séparation entre un espace intérieur I, situé à l'intérieur du véhicule et un espace extérieur E, situé à l'extérieur du véhicule. L'élément vitré 2 présente ainsi une face extérieure 21 destinée à être tournée vers l'espace extérieur, une face intérieure 22, destinée à être tournée vers l'espace intérieur, ainsi qu'un chant périphérique.

L'élément vitré 2 peut être monolithique ou non, constitué d'un substrat de matière unique, ou de plusieurs substrats de matière entre lesquels sont intercalés un ou plusieurs films de matière adhérente dans le cas des vitrages feuilletés. Le (ou les) substrat(s) de matière peut (ou peuvent) être dans une matière minérale, notamment en verre, ou organique, notamment en matière plastique. Le vitrage peut être un vitrage isolant, c'est-à-dire comportant au moins deux substrats monolithiques ou feuilletés, séparés par une lame de gaz.

L'élément vitré 2 peut être plat ou bombé.

L'embase 5 est à base de matière plastique et présente un corps 50, une face extérieure 51 située en vis-à-vis de la face intérieure 22 de l'élément vitré, une face intérieure 52 tournée vers l'intérieur et un logement 54 pour la fixation d'un autre accessoire (qui n'est pas ici un accessoire intérieur) en regard de la face intérieure 22 de l'élément vitré.

Le corps 50 est situé entre la face extérieure 51 et la face intérieure 52 ; il désigne la matière constitutive de l'embase qui est située entre ses deux faces et qui est recouverte par ces faces.

Le logement 54 est un endroit de l'embase 5 sans matière constitutive de l'embase : il s'agit d'un creux ou d'un trou d'une forme particulière car il est destiné à permettre d'attacher réversiblement un accessoire autre que l'accessoire intérieur déjà mentionné : cet accessoire peut être en particulier un accessoire intérieur tel qu'un capteur et notamment un capteur optique, comme par exemple un capteur optique de pluie, ou un capteur de luminosité.

En d'autres termes, l'invention n'est pas située dans le domaine technique des supports, ou embases, simples, c'est-à-dire des embases ne permettant la fixation que d'un seul accessoire, mais spécifiquement dans le domaine technique des supports pour la fixation de plusieurs accessoires, dont l'un au moins est un accessoire intérieur. Ce domaine est spécifique dans le sens où l'accessoire intérieur, du fait de son accessibilité et de son utilisation directe par l'usager du véhicule, est soumis à des sollicitations, notamment mécaniques, élevées, et il faut que son attachement à l'embase soit fort, tout en étant amovible.

Par ailleurs, l'invention est située dans le domaine technique des supports à au moins un logement, pour l'accueil et la fixation d'un accessoire à visée extérieure, qui comporte une partie tournée vers l'extérieur dans un but particulier.

Dans le vitrage selon l'invention, il est proposé que l'embase 5 comporte en outre une pièce métallique 6 qui présente :
- au moins une partie noyée 60, et de préférence deux parties noyées 60, qui est située, ou qui sont situées chacune complètement à l'intérieur du corps 50 de l'embase 5,
- au moins une partie saillante extérieure 61, et de préférence deux parties saillantes extérieures 61, faisant saillie plus à l'extérieur que la face extérieure 51 de l'embase 5 et en direction de la face intérieure 22 de l'élément vitré, et
- au moins une partie saillante intérieure 62 qui fait saillie plus à l'intérieur que la face intérieure 52 de l'embase 5.

Ainsi, ces au moins trois parties, voire au moins quatre parties, voire au moins cinq parties de la pièce métalliques vont permettre d'attacher l'accessoire intérieur d'une manière fiable, précise et solide.

La pièce métallique 6 est destinée à constituer une interface de fixation pour l'accessoire intérieur dans le sens où l'accessoire intérieur est, au moins en partie, attaché à l'embase grâce à la pièce métallique.

Il est possible que l'accessoire intérieur soit attaché à l'embase uniquement grâce à la pièce métallique mais il est possible aussi que l'accessoire intérieur soit attaché en partie à la pièce métallique 6 et en partie au corps 50 ; ce second attachement peut être fait par clippage, par exemple.

L'embase 5 est en matière plastique, ou à base de matière plastique incorporant en outre au moins renfort, comme par exemple des fibres et notamment des fibres de verre et peut être fabriquée par exemple par moulage. Dans ce cas, il est particulièrement pratique de prévoir que la pièce métallique soit intégrée à l'embase lors du moulage de l'embase.

Dans un mode de réalisation préféré, la pièce métallique 6 est inamovible, sauf à modifier l'intégrité de l'embase 5. De préférence, la pièce métallique 6 constitue un insert qui est surmoulé avec le corps 50. La partie noyée 60 se trouve dans le corps 50 et les parties saillantes 61, 62 se trouvent en dehors du corps 50.

La partie saillante intérieure 62, constitue ainsi une interface pour la fixation de l'accessoire intérieur.

Cette fixation est extrêmement fiable du fait que les efforts subis par la partie saillante intérieure 62 lors de la fixation de l'accessoire intérieur et lors de son utilisation (en particulier lorsque sa position est modifiée par l'usager), sont transmis à la partie noyée, ainsi qu'à la partie, ou aux parties, saillante(s) extérieure(s).

Par exemple, en référence à la figure 4 sur laquelle la référence 4 désigne un pied de rétroviseur intérieur qui est attaché à l'embase 5 grâce à la pièce métallique 6, chacun peut constater que tout effort sur le pied de rétroviseur vers l'intérieur va être réparti dans le corps 50 de l'embase grâce à la partie noyée 60 et en surface extérieure 51 de l'embase grâce aux deux parties saillantes extérieures 61.

Pour une meilleure répartition des efforts, la pièce métallique 6 présente de préférence un plan de symétrie centrale qui est illustré par la ligne en pointillés en figure 4 ; de préférence en outre, l'embase 5 présente aussi un plan de symétrie centrale qui est illustré par la ligne en pointillés en figure 4

En outre, les vibrations du véhicule qui seraient susceptibles d'être transmises à l'accessoire intérieur par la fixation de cet accessoire sont atténuées par la différence de nature des matériaux :
- entre l'embase, à base de matière plastique, et
- la pièce métallique, en métal ou alliage métallique.

Les deux parties noyées 60 sont situées de part et d'autre (de chaque côté du plan de symétrie illustré par la ligne en pointillés) du logement 54 et les deux parties saillantes extérieures 61 sont situées de part et d'autre (de chaque côté du plan de symétrie illustré par la ligne en pointillés) du logement 54 pour l'autre accessoire pour améliorer encore la répartition des efforts dans l'embase.

Chaque partie saillante extérieure 61 constitue ainsi le prolongement, à l'extérieure du corps 50, de chaque partie noyée 60.

En figure 4, d'une manière toute particulière, les deux parties saillantes extérieures 61 sont toutes les deux au contact de la face intérieure 22 de l'élément vitré 2 : elles touchent cette face intérieure ; d'une manière complètement surprenante, alors même qu'il est généralement préféré d'éviter tout contact direct entre une pièce métallique et un élément vitré, en particulier lorsqu'il est en verre, les inventeurs se sont aperçu que dans le cas précis de la pièce métallique telle que décrite ici, ce contact peut participer à augmenter la rigidité de la fixation de l'accessoire intérieur et peut participer en conséquence à la diminution, voire permettre la suppression, de vibrations sinon subies par l'accessoire intérieur.

La conséquence étonnante de ce contact entre une (ou plusieurs parties) saillante(s) extérieure(s) 61 et la face intérieure 22 de l'élément vitré 2 est que l'accessoire intérieur vibre moins sous l'effet du déplacement du véhicule. S'il s'agit d'un rétroviseur intérieur, la vision au travers de ce rétroviseur est ainsi plus stable ; s'il s'agit d'un écran de visualisation, l'image produite par cet écran est plus stable.

La figure 4 montre par ailleurs que l'embase 5 est attachée à l'élément vitré 2, grâce à une matière adhésive 65, notamment grâce à couche de colle ou au moins une plaque adhésive double-face ; cette matière adhésive est ainsi interposée, avec contacts, entre la face intérieure 22 de l'élément vitré 2 et la face .extérieure 51 de l'embase 5.

Les deux parties saillantes extérieures 61 présentent chacune une épaisseur identique à l'épaisseur de cette matière adhésive 65. Elles peuvent ainsi permettre de contrôler l'épaisseur de cette matière adhésive 65.

La partie saillante intérieure 62 est une interface de fixation par clipsage, ou par agrafage, ou par chaussage, ou par quart-de-tour et constitue ainsi de préférence une interface de fixation d'un pied de rétroviseur ou d'un écran de visualisation.

La figure 6 montre la pièce métallique 6 en détail ; elle est une pièce d'un seul tenant, afin de présenter en elle-même une résistance mécanique élevée et présente, de préférence, une forme d'arche, ou de U pour permettre une bonne répartition des efforts. Le plan de symétrie de la pièce métallique 6 est illustré en pointillé ; il est transversal à la forme d'arche.

La pièce métallique 6 présente deux pieds latéraux 66, 66' qui sont reliés par un dôme 67. Le dôme 67 appartient au moins en partie à la partie saillante intérieure 62 et en fait ici, Le dôme 67 appartient complètement à la partie saillante intérieure 62. Il est de préférence d'un seul tenant mais peut éventuellement être ajouré si cela est nécessaire pour améliorer la fixation de l'accessoire intérieur.

Ici, par ailleurs, chacun des pieds latéraux 66, 66' fait saillie plus l'extérieur que la face extérieure 51 de l'embase 5 (et en direction de la face intérieure 22 de l'élément vitré 2 lorsque l'orientation de la pièce métallique par rapport à l'embase et par rapport à l'élément vitré est considéré).

Les deux parties noyées 60, les deux parties saillantes extérieures 61, et la partie saillante intérieure 62 sont matérialises sur cette figure 6 afin de permettre de les localiser lorsque la pièce métallique 6 est observée seule ; toutefois, ces cinq parties ne sont observables que lorsque l'embase intègre en partie cette pièce métallique puisqu'elles sont définies en rapport avec cette embase.

Les pieds latéraux 66, 66' sont en regard l'un de l'autre et s'étendent chacun selon un angle supérieur à 90°, par exemple de 100°, par rapport à un plan général du dôme 67, afin d'augmenter encore la résistance mécanique.

Le montage/la fixation du pied du rétroviseur se fait avantageusement par chaussage du pied le long de deux glissières opposées 68, 68' situées aux extrémités latérales du dôme. Ces glissières 68, 68' appartiennent aussi complètement à la partie saillante intérieure 62. Le dôme 67 et les glissières 68, 68' constituent ensemble la partie saillante intérieure 62.

A titre d'exemple, l'épaisseur du dôme au plus épais est de l'ordre de 3 mm, la largeur du dôme entre les deux pieds latéraux est de l'ordre de 26 mm, et la longueur hors tout de la pièce métallique (qui est aussi la longueur des glissières) est de l'ordre de 32 mm ; l'épaisseur des pieds latéraux est de l'ordre de 1 mm.

Dans une variante non illustrée, chaque pied latéral se divise en plusieurs parties, notamment en deux parties, pour augmenter encore l'emprise des parties noyées dans le corps 50.

La figure 5 montre une embase 5 simple, utilisable en tant que telle pour la fixation de deux accessoires à l'élément vitré, et uniquement deux accessoires :
- un accessoire intérieur fixé à l'embase 5 au moins en partie grâce à la partie saillante intérieure 62, et
- un autre accessoire, ou accessoire à visée extérieure, fixé dans le logement 54.

Le dôme 67 de la pièce métallique 6 est découpé en arc de cercle afin de permettre le positionnement de l'autre accessoire dans le logement 54 et l'enlèvement de cet autre accessoire du logement 54 en conservant l'embase 5 attachée à l'élément vitré, c'est-à-dire sans avoir besoin d'enlever l'embase 5.

Lorsque la forme générale en U de la pièce métallique 6 est observée, la concavité est orientée vers l'intérieur.

L'embase 5 peut être fixée par de la matière adhésive à la face intérieure 22 de l'élément vitré.

Les accessoires sont attachables réversiblement et peuvent être choisis dans une liste comprenant : un capteur de pluie, un capteur de luminosité, un capteur photographique (appareil de captation d'image fixe dans le domaine du visible ; analogique ou numérique), un capteur infrarouge, une caméra (appareil de captation d'image animée dans le domaine du visible ; analogique ou numérique), un support de rétroviseur, un support d'écran de visualisation.

Les figures 1 à 4 montrent une embase 5 identique à celle de la figure 5 qui est en outre liée à une platine 3 pour la fixation d'au moins un accessoire supplémentaire (soit au moins trois accessoires) à l'élément vitré :
- un accessoire intérieur fixé à l'embase 5 au moins en partie grâce à la partie saillante intérieure 62,
- un autre accessoire, ou accessoire à visée extérieure, fixé dans le logement 54, et
- un accessoire supplémentaire, ou accessoire supplémentaire à visée extérieure, fixé en regard d'un trou 30.

La platine 3 comporte d'une part une face extérieure 31 destinée à être tournée vers l'espace extérieur et qui est destinée à être fixée indirectement à la face intérieure 22 de l'élément vitré en vis-à-vis de cette face intérieure de l'élément vitré et d'autre part une face intérieure 32, destinée à être tournée vers l'espace intérieur.

Elle comporte en outre des éléments 36 (trous de clippage) pour l'attachement réversible d'un cache intérieur.

Sur ces figures 1 à 4, l'embase 5 est liée mécaniquement par au moins un bras de liaison 55 en matière plastique liant ladite embase 5 à une platine 3, et de préférence par plusieurs bras de liaison 55 (en l'occurrence ici, quatre), à la manière de ce qui est connu de la demande internationale de brevet WO 2016/177955 au nom du Demandeur.

L'ensemble formé par l'embase 5, la pièce métallique 6, les bras de liaison 55 et la platine 3 est de préférence fabriqué par moulage, en une seule opération, et avec une très grande précision.

La pièce unique qui comporte au moins l'embase 5, la pièce métallique 6, les bras de liaison 55 et la platine 3 est fixée à la face intérieure 22 de l'élément vitré par un procédé automatique, semi-automatique ou manuel.

La platine 3 et l'embase 5 peuvent être fixées (figure 4) respectivement par deux matières adhésives 53 et 55 indépendantes à la face intérieure 22 de l'élément vitré ; elles peuvent aussi être fixées par la même matière adhésive. Cette matière, ou ces matières, peut être, ou peuvent être un ruban adhésif double face ou une colle. L'épaisseur de matière adhésive est de l'ordre de 0,5 à 1 mm.

Bien sûr, cette matière adhésive est disposée contre la face extérieure respective de la platine 3 et de l'embase 5 de telle sorte que le trou 30 et le logement 54 soit tous les deux vides de matière adhésive.

Dans une variante de réalisation non illustrée, la pièce métallique 6 peut être associée de manière amovible à l'embase 5 : le corps 50 comprend alors par exemple deux fentes opposées conçues pour recevoir chacune par engagement/clippage, un pied latéral 66, 66'.

## Revendications

1. Vitrage (1) de véhicule comportant au moins un élément vitré (2) et au moins une embase (5) pour l'attachement réversible d'au moins un accessoire intérieur, tel qu'un rétroviseur intérieur ou un écran de visualisation intérieur, audit élément vitré (2), ladite embase (5) étant à base de matière plastique et présentant un corps (50), une face extérieure (51) située en vis-à-vis de la face intérieure (22) dudit élément vitré, une face intérieure (52) et un logement (54) pour la fixation d'un autre accessoire en vis-à-vis de la face intérieure (22) dudit élément vitré, tel qu'un capteur, **caractérisé en ce que** ladite embase (5) comporte en outre une pièce métallique (6) qui présente :
- au moins une partie noyée (60) située à l'intérieur du corps (50) de ladite embase (5), et de préférence deux parties noyées (60) situées à l'intérieur du corps (50) de ladite embase (5),
- au moins une partie saillante extérieure (61) faisant saillie plus à l'extérieur que ladite face extérieure (51) de ladite embase (5) et en direction de la face intérieure (22) dudit élément vitré, et de préférence deux parties saillantes extérieures (61) faisant saillie plus à l'extérieur que ladite face extérieure (51) de ladite embase (5) et en direction de la face intérieure (22) dudit élément vitré, et
- au moins une partie saillante intérieure (62) qui fait saillie plus à l'intérieur que ladite face intérieure (52) de ladite embase (5).

2. Vitrage (1) selon la revendication 1, **caractérisé en ce que** deux parties noyées (60) sont situées de part et d'autre dudit logement (54) et/ou deux parties saillantes extérieures (61) sont situées de part et d'autre dudit logement (54).

3. Vitrage (1) selon la revendication 1 ou 2, **caractérisé en ce que** ladite partie saillante extérieure (61) est au contact de la face intérieure (22) dudit élément vitré (2), et de préférence les deux parties saillantes extérieures (61) sont au contact de la face intérieure (22) dudit élément vitré (2).

4. Vitrage (1) selon l'une quelconque des revendications 1 à 3, **caractérisé en ce que** ladite embase (5) est attachée audit élément vitré (2), grâce à une matière adhésive (65), notamment grâce à couche de colle ou au moins une plaque adhésive double-face, avec de préférence au moins une et de préférence encore deux, partie(s) saillante(s) extérieure(s) (61) qui présente(nt) une épaisseur identique à l'épaisseur de ladite matière adhésive (65).

5. Vitrage (1) selon l'une quelconque des revendications 1 à 4, **caractérisé en ce que** ladite partie saillante intérieure (62) est une interface de fixation par clipsage, ou par agrafage, ou par chaussage, ou par quart-de-tour et constitue de préférence une interface de fixation d'un pied de rétroviseur intérieur ou d'un écran de visualisation intérieur.

6. Vitrage (1) selon l'une quelconque des revendications 1 à 5, **caractérisé en ce que** ladite pièce métallique (6) est une pièce d'un seul tenant et présente, de préférence, une forme d'arche avec deux pieds latéraux qui sont reliés par un dôme, ledit dôme appartenant au moins en partie à ladite partie saillante intérieure (62) et de préférence, chacun des pieds qui fait saillie plus l'extérieur que ladite face extérieure (51) de ladite embase (5) et en direction de la face intérieure (22) dudit élément vitré (2).

7. Vitrage (1) selon l'une quelconque des revendications 1 à 6, **caractérisé en ce que** ladite embase (5) est liée mécaniquement par au moins un bras de liaison (55) en matière plastique liant ladite embase (5) à une platine (3), et de préférence par plusieurs bras de liaison (55).

8. Embase (5) de fixation d'accessoires, pour la fixation de plusieurs accessoires au vitrage (1) selon l'une quelconque des revendications 1 à 7, **caractérisé en ce que** ladite embase (5) comporte une pièce métallique (6) qui présente :
- au moins une partie noyée (60) située à l'intérieur du corps (50) de ladite embase (5), et de préférence deux parties noyées (60) situées à l'intérieur du corps (50) de ladite embase (5),
- au moins une partie saillante extérieure (61) faisant saillie plus à l'extérieur que ladite face extérieure (51) de ladite embase (5) et en direction de la face intérieure (22) dudit élément vitré, et de préférence deux parties saillantes extérieures (61) faisant saillie plus à l'extérieur que ladite face extérieure (51) de ladite embase (5) et en direction de la face intérieure (22) dudit élément vitré, et
- au moins une partie saillante intérieure (62) qui fait saillie plus à l'intérieur que ladite face intérieure (52) de ladite embase (5).

## Patentansprüche

1. Fahrzeugglasscheibe (1), die mindestens ein Glaselement (2) und mindestens einen Sockel (5) für die reversible Befestigung mindestens eines Innenzubehörs, wie eines Innenrückspiegels oder eines Innenanzeigebildschirms, an dem Glaselement (2) umfasst, wobei der Sockel (5) auf Kunststoffmaterial basiert und einen Körper (50), eine Außenfläche (51), die gegenüber der Innenfläche (22) des Glaselements angeordnet ist, eine Innenfläche (52) und eine Aufnahme (54) für die Befestigung eines weiteren Zubehörs gegenüber der Innenfläche (22) des Glaselements, wie eines Sensors, aufweist, **dadurch gekennzeichnet, dass** der Sockel (5) ferner ein Metallteil (6) umfasst, das Folgendes aufweist:
- mindestens einen eingebetteten Teil (60), der sich im Inneren des Körpers (50) des Sockels (5) befindet, und vorzugsweise zwei eingebettete Teile (60), die sich im Inneren des Körpers (50) des Sockels (5) befinden,
- mindestens einen äußeren vorspringenden Teil (61), der weiter nach außen als die Außenfläche (51) des Sockels (5) und in Richtung der Innenfläche (22) des Glaselements hin vorspringt, und vorzugsweise zwei äußere vorspringende Teile (61), die weiter nach außen als die Außenfläche (51) des Sockels (5) und in Richtung der Innenfläche (22) des Glaselements hin vorspringen, und
- mindestens einen inneren vorspringenden Teil (62), der weiter nach innen als die Innenfläche (52) des Sockels (5) vorspringt.

2. Glasscheibe (1) nach Anspruch 1, **dadurch gekennzeichnet, dass** zwei eingebettete Teile (60) auf jeder Seite der Aufnahme (54) angeordnet sind und/oder zwei äußere vorspringende Teile (61) auf jeder Seite der Aufnahme (54) angeordnet sind.

3. Glasscheibe (1) nach Anspruch 1 oder 2, **dadurch gekennzeichnet, dass** der äußere vorspringende Teil (61) in Kontakt mit der Innenfläche (22) des Glaselements (2) steht, und vorzugsweise beide äußeren vorspringenden Teile (61) in Kontakt mit der Innenfläche (22) des Glaselements (2) stehen.

4. Glasscheibe (1) nach einem der Ansprüche 1 bis 3, **dadurch gekennzeichnet, dass** der Sockel (5) an dem Glaselement (2) mittels eines Klebematerials (65), insbesondere mittels einer Klebstoffschicht oder mindestens einer doppelseitigen Klebeplatte, befestigt ist, mit vorzugsweise mindestens einem und vorzugsweise zwei äußeren vorspringenden Teil(en) (61), der (die) eine Dicke aufweist (aufweisen), die mit der Dicke des Klebematerials (65) identisch ist (sind).

5. Glasscheibe (1) nach einem der Ansprüche 1 bis 4, **dadurch gekennzeichnet, dass** der innere vorspringende Teil (62) eine Schnittstelle zur Befestigung durch Einklipsen oder durch Klammern oder durch Einrasten oder durch Vierteldrehung ist und vorzugsweise eine Schnittstelle zur Befestigung eines Fußes eines Innenrückspiegels oder eines Innenanzeigebildschirms bildet.

6. Glasscheibe (1) nach einem der Ansprüche 1 bis 5, **dadurch gekennzeichnet, dass** das Metallteil (6) ein einteiliges Stück ist und vorzugsweise eine Bogenform mit zwei seitlichen Schenkeln aufweist, die durch eine Kuppel verbunden sind, wobei die Kuppel mindestens teilweise zu dem inneren vorspringenden Teil (62) gehört und vorzugsweise jeder der Schenkel weiter nach außen als die Außenfläche (51) des Sockels (5) und in Richtung der Innenfläche (22) des Glaselements (2) hin vorspringt.

7. Glasscheibe (1) nach einem der Ansprüche 1 bis 6, **dadurch gekennzeichnet, dass** der Sockel (5) durch mindestens einen Verbindungsarm (55) aus Kunststoffmaterial, der den Sockel (5) mit einer Platte (3) verbindet, und vorzugsweise durch mehrere Verbindungsarme (55) mechanisch verbunden ist.

8. Zubehörbefestigungssockel (5) zur Befestigung einer Vielzahl von Zubehörteilen an der Glasscheibe (1) nach einem der Ansprüche 1 bis 7, **dadurch gekennzeichnet, dass** der Sockel (5) ein Metallteil (6) umfasst, das Folgendes aufweist:
- mindestens einen eingebetteten Teil (60), der sich im Inneren des Körpers (50) des Sockels (5) befindet, und vorzugsweise zwei eingebettete Teile (60), die sich im Inneren des Körpers (50) des Sockels (5) befinden,
- mindestens einen äußeren vorspringenden Teil (61), der weiter nach außen als die Außenfläche (51) des Sockels (5) und in Richtung der Innenfläche (22) des Glaselements hin vorspringt, und vorzugsweise zwei äußere vorspringende Teile (61), die weiter nach außen als die Außenfläche (51) des Sockels (5) und in Richtung der Innenfläche (22) des Glaselements hin vorspringen, und
- mindestens einen inneren vorspringenden Teil (62), der weiter nach innen als die Innenfläche (52) des Sockels (5) vorspringt.

## Claims

1. A vehicle glazing panel (1) comprising at least one glazed element (2) and at least one base (5) for the reversible attachment of at least one internal accessory, such as an internal rearview mirror or an internal display screen, to said glazed element (2), said base (5) being based on plastics material and having a body (50), an external face (51) located opposite the internal face (22) of said glazed element, an internal face (52) and a housing (54) for the fixing of a further accessory opposite the internal face (22) of said glazed element, such as a sensor, **characterized in that** said base (5) further comprises a metal part (6) which has:
- at least one recessed part (60) located inside the body (50) of said base (5), and preferably two recessed parts (60) located inside the body (50) of said base (5),
- at least one external protruding part (61) which protrudes further to the exterior than said external face (51) of said base (5) and in the direction of the internal face (22) of said glazed element, and preferably two external protruding parts (61) which protrude further to the exterior than said external face (51) of said base (5) and in the direction of the internal face (22) of said glazed element, and
- at least one internal protruding part (62) which protrudes further to the interior than said internal face (52) of said base (5).

2. The glazing panel (1) as claimed in claim 1, **characterized in that** two recessed parts (60) are located on either side of said housing (54) and/or two external protruding parts (61) are located on either side of said housing (54).

3. The glazing panel (1) as claimed in claim 1 or 2, **characterized in that** said external protruding part (61) is in contact with the internal face (22) of said glazed element (2) and preferably the two external protruding parts (61) are in contact with the internal face (22) of said glazed element (2).

4. The glazing panel (1) as claimed in any one of claims 1 to 3, **characterized in that** said base (5) is attached to said glazed element (2) using an adhesive material (65), in particular using a layer of adhesive or at least one double-sided adhesive pad, preferably with at least one, and further preferably two, external protruding part(s) (61) which has (have) a thickness which is identical to the thickness of said adhesive material (65).

5. The glazing panel (1) as claimed in any one of claims 1 to 4, **characterized in that** said internal protruding part (62) is an interface for fixing by clipping or by stapling or by fitting or by a quarter-turn rotation and preferably constitutes an interface for fixing a foot of an internal rearview mirror or an internal display screen.

6. The glazing panel (1) as claimed in any one of claims 1 to 5, **characterized in that** said metal part (6) is a part in one piece and preferably has an arcuate shape with two lateral feet which are connected by a dome, said dome belonging at least partially to said internal protruding part (62) and preferably each of the feet which protrudes further to the exterior than said said external face (51) of said base (5) and in the direction of the internal face (22) of said glazed element (2).

7. The glazing panel (1) as claimed in any one of claims 1 to 6, **characterized in that** said base (5) is mechanically connected by at least one connecting arm (55) which is made of plastics material and which connects said base (5) to a plate (3), and preferably by a plurality of connecting arms (55).

8. A base (5) for fixing accessories, for the fixing of a plurality of accessories to the glazing panel (1) as claimed in any one of claims 1 to 7, **characterized in that** said base (5) comprises a metal part (6) which has:
- at least one recessed part (60) located inside the body (50) of said base (5) and preferably two recessed parts (60) located inside the body (50) of said base (5),
- at least one external protruding part (61) which protrudes further to the exterior than said external face (51) of said base (5) and in the direction of the internal face (22) of said glazed element, and preferably two external protruding parts (61) which protrude further to the exterior than said external face (51) of said base (5) and in the direction of the internal face (22) of said glazed element, and
- at least one internal protruding part (62) which protrudes further to the interior than said internal face (52) of said base (5).
